Europäisches Patentamt

European Patent Office

Office européen des brevets

(19)

(11) Veröffentlichungsnummer: **0 305 841**
**A2**

(12) **EUROPÄISCHE PATENTANMELDUNG**

(21) Anmeldenummer: **88113608.9**

(22) Anmeldetag: **22.08.88**

(51) Int. Cl.⁴: **B29C 67/22 , B29C 31/04 , B29C 31/02 , //B29K105:04**

(30) Priorität: **02.09.87 DE 3729266**

(43) Veröffentlichungstag der Anmeldung:
**08.03.89 Patentblatt 89/10**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Krippl, Kurt**
**Niederstrasse 104**
**D-4019 Monheim(DE)**

(54) **Verfahren und Vorrichtung zum Auftragen eines fliessfähigen, Kunststoff, insbesondere Schaumstoff, bildenden Reaktionsgemisches.**

(57) Um beim Auftragen eines fließfähigen, Kunststoff, insbesondere Polyurethan-Schaumstoff, bildenden Reaktionsgemisches auf eine bewegte Unterlage (1) eine über die gesamte Arbeitsbreite gleichmäßige Stärke der Gemischschicht (5) sicherzustellen, wird der zum Auftragen dienende, sich quer über die Unterlage erstreckende, unten Austrittsöffnungen (3) aufweisende Auftragsbehälter (2) im Inneren mittels eines über der Reaktionsgemischfüllung (14) aufrechterhaltenen Druckluftpolsters (15) beaufschlagt, damit aus allen Austrittsöffnungen (3) die gleiche Menge ausströmt.

FIG.1

EP 0 305 841 A2

## Verfahren und Vorrichtung zum Auftragen eines fließfähigen, Kunststoff, insbesondere Schaumstoff, bildenden Reaktionsgemisches

Die Erfindung betrifft ein Verfahren und eine Vorrichtung zum Auftragen eines fließfähigen, Kunststoff, insbesondere Schaumstoff, bildenden Reaktionsgemisches, wobei das zugeführte Reaktionsgemisch zu Bildung des Vorhanges innerhalb eines länglichen, sich quer über die Unterlage erstreckenden, unten Austrittsöffnungen aufweisenden, rohrartigen Auftragsbehälters verteilt wird, bevor es aus den Austrittsöffnungen austritt.

Bei der Herstellung von Kunststoffbahnen, insbesondere Schaumstoffbahnen oder -platten, wobei ein fließfähiges Reaktionsgemisch in dünner, überall exakt gleich starker Schicht auf eine wandernde Unterlage aufgetragen werden muß, wird es mit zunehmender Auftragsbreite immer schwieriger, die Schichtstärke überall gleichmäßig einzuhalten. Durch die hohe Viskosiät des Reaktionsgemisches und den langen Fließweg von dem Mischkopf zum Auftragsbehälter und innerhalb des Auftragsbehälters selbst bis zu den einzelnen Austrittsöffnungen herrschen an diesen Austrittsöffnungen unterschiedliche Drücke. Dies hat zur Folge, daß aus den Austrittsöffnungen unterschiedliche Mengen ausströmen und dementsprechend die Auftragsschicht ungleichmäßig ist.

Aus der DE-A-3 237 592 ist es bekannt, beim Auftragen eines verschäumten Mediums, zum Beispiel einer Farbflotte, auf ein Flächenerzeugnis im Austrittschlitz über die gesamte Arbeitsbreite gleichmäßige Druckverhältnisse anzustreben, um einen gleichmäßigen Auftrag zu erzielen. Dabei wird der Druck an verschiedenen Stellen des Austrittschlitzes gemessen. Diese Methode eignet sich nicht zum Auftragen eines Feststoff bildenden Reaktionsgemisches, sondern nur für bereits verschäumte Medien, welche keinen Feststoff bilden.

Es besteht die Aufgabe, ein Verfahren und eine Vorrichtung zu schaffen, womit ein gleichmäßiger Auftrag des Reaktionsgemisches über die gesamte Auftragsbreite sichergestellt ist.

Gelöst wird diese Aufgabe dadurch, daß im Auftragsbehälter ein Mindestfüllstand an Reaktionsgemisch und darüber ein Druckluftpolster aufrechterhalten werden.

Durch das Druckluftpolster wird erreicht, daß in allen Austrittsöffnungen der gleiche Druck herrscht und damit auch die gleiche Menge an Reaktionsgemisch pro Zeiteinheit ausfließt, woraus wiederum eine überall gleichmäßige Stärke der auf die bewegte Unterlage aufgebrachten Schicht an Reaktionsgemisch folgt. Es versteht sich, daß anstelle eines Druckluftpolsters auch ein Polster aus einem anderen Druckgas, z. B. Inertgas, im Rahmen dieser Erfindung Anwendung finden kann. Wird ein Druck über 2 bar im Auftragsbehälter aufrechterhalten, so ist dies besonders günstig, wenn Schaumstoff bildende, gasbeladene Reaktionskomponenten verarbeitet werden, weil dann das im Reaktionsgemisch enthaltene Gas in Lösung bleibt und zur Keimbildung als Voraussetzung für eine feinzellige Schaumstoffstruktur zur Verfügung steht.

Vorzugsweise wird der Druck im Auftragsbehälter über das Luftpolster in Abhängigkeit vom Füllstand geregelt.

Diese Ausführungsform ist besonders günstig, weil damit bei Betriebsstörungen Schwankungen des Füllstandes im Auftragsbehälter ausgeglichen werden.

Die neue Vorrichtung zum Auftragen eines fließfähigen, Kunststoff, insbesondere Schaumstoff, bildenden Reaktionsgemisches auf eine bewegte Unterlage geht aus von einem einer Mischvorrichtung nachgeordneten, mit mindestens einer Auslaßöffnung versehenen, hohlen, länglichen Auftragsbehälter.

Das Neue ist darin zu sehen, daß der Auftragsbehälter über eine Druckluftzuleitung mit einer Druckluftquelle verbunden ist.

Auf diese Weise ist es möglich, an den Innenraum des Auftragsbehälters ein Druckluftpolster anzulegen, um die im Zusammenhang mit dem neuen Verfahren beschriebene Wirkung zu erzielen.

Um vorzugsweise den Druck innerhalb des Auftragsbehälters in Abhängigkeit vom Füllstand des Reaktionsgemisches regeln zu können, ist in der Druckluftleitung ein Regelventil angeordnet, welches zusammen mit einem dem Auftragsbehälter zugeordneten Füllstandsanzeiger und einem Regler einen Regelkreis darstellt.

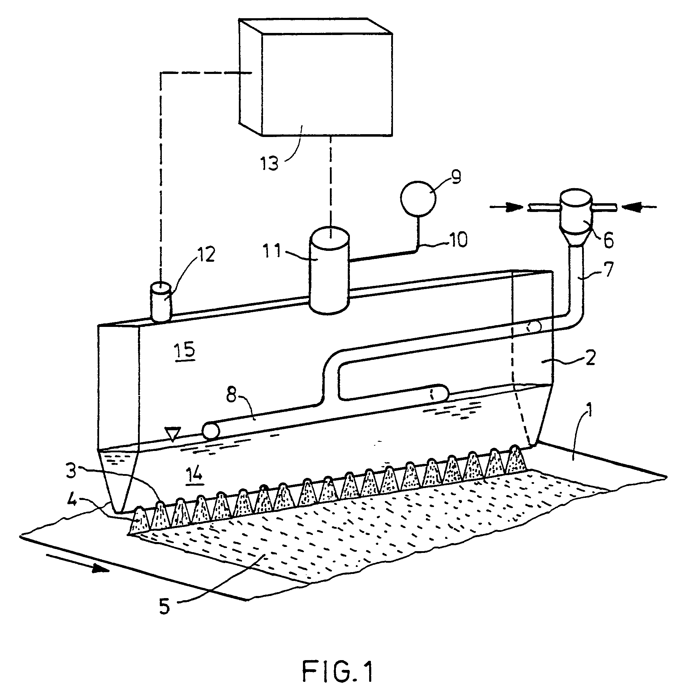

In der Zeichnung ist die neue Vorrichtung in einem Ausführungsbeispiel in perspektivischer Ansicht rein schematisch dargestellt und nachstehend näher erläutert:

Über einer auf einem nicht dargestellten Doppeltransportband geförderten Papierbahn als bewegte Unterlage 1 ist eine Vorrichtung zum Aufgeben eines fließfähigen, Polyurethan-Schaumstoff bildenden Reaktionsgemisches angeordnet. Sie besteht aus einem (zur besseren Anschaulichkeit als durchsichtig dargestellten) Auftragsbehälter 2, welcher sich mit vertikalem Abstand quer über die Unterlage 1 erstreckt und in seinem unteren Bereich Austrittsöffnungen 3 aufweist, aus denen das Reaktionsgemisch austritt und sich zu einem Vorhang 4 vereinigt, aus welchem sich eine Schicht 5 auf der bewegten Unterlage bildet. Das in einem Mischkopf 6 aus den Komponenten Polyol und Isocyanat erzeugte Reaktionsgemisch gelangt über eine Zuführleitung 7 in ein innerhalb des Auftragsbehälters 2 angeordnetes Vorverteilerrohr 8. Außerdem mündet eine mit einer Druckluftquelle 9 verbundene Druckluftzuleitung 10 oberhalb des Flüssigkeitsspiegels in den Auftragsbehälter 2 ein. In ihr ist ein Druckregelventil 11 angeordnet, welches zusammen mit einem als Näherungsgeber ausgebildeten, am Auftragsbehälter 2 angeordneten Füllstandsanzeiger 12 und einem Regler 13 einen Regelkreis bildet, womit der Druck im Behälter 2 in Abhängigkeit vom Füllstand in der Weise eingestellt wird, daß stets die Ausströmmenge aus den Austrittsöffnungen gleichbleibt. Das im Auftragsbehälter 2 über der Reaktionsgemischfüllung 14 vorhandene Druckluftpolster ist mit 15 bezeichnet.

## Ansprüche

1. Verfahren zum Auftragen eines fließfähigen, Kunststoff, insbesondere Schaumstoff, bildenden Reaktionsgemisches in Form eines Vorhanges (4) auf eine bewegte Unterlage (1), wobei das zugeführte Reaktionsgemisch zur Bildung des Vorhanges (4) innerhalb eines länglichen, sich quer über die Unterlage (1) erstreckenden, unten Austrittsöffnungen (3) aufweisenden, rohrartigen Auftragsbehälters (2) verteilt wird, bevor es aus den Austrittsöffnungen (3) austritt, dadurch gekennzeichnet, daß im Auftragsbehälter (2) ein Mindestfüllstand an Reaktionsgemisch (14) und darüber ein Druckluftpolster (15) aufrechterhalten werden.

2. Verfahren nach Anspruch 1, dadurch gekennzeichnet, daß der Druck im Auftragsbehälter (2) über das Druckluftpolster (15) in Abhängigkeit vom Füllstand geregelt wird.

3. Vorrichtung zum Auftragen eines fließfähigen, Kunststoff, insbesondere Schaumstoff, bildenden Reaktionsgemisches auf eine bewegte Unterlage (1), bestehend aus einem einer Mischvorrichtung (6) nachgeordneten, mit mindestens einer Austrittsöffnung (3) versehenen, hohlen, länglichen Auftragsbehälter (2), dadurch gekennzeichnet, daß der Auftragsbehälter (2) über eine Druckluftzuleitung (10) mit einer Druckluftquelle (9) verbunden ist.

4. Vorrichtung nach Anspruch 3, dadurch gekennzeichnet, daß in der Druckluftzuleitung (10) ein Druckregelventil (11) angeordnet ist, welches zusammen mit einem dem Auftragsbehälter (2) zugeordneten Füllstandsanzeiger (12) und einem Regler (13) einen Regelkreis darstellt.

FIG.1